# EUROPEAN PATENT SPECIFICATION

(11) **EP 0 390 752 B1**
(45) Date of publication and mention of the grant of the patent: **18.05.1994**
(21) Application number: 90830115.3
(22) Date of filing: 20.03.1990
(51) Int. Cl.: B62D 25/20, B62D 25/08

(54) **A rear subassembly for a motor vehicle floor**
Baugruppe für den hinteren Boden eines Motorfahrzeuges
Sous-groupe pour le plancher arrière d'un véhicule automobile

(30) Priority: 30.03.1989 IT 6722489
(43) Date of publication of application: 03.10.1990
(73) Proprietor: FIAT AUTO S.p.A., 10135 Torino (IT)
(72) Inventor: Camuffo, Sergio, I-10131 Torino (IT)
(74) Representative: Bosotti, Luciano

(56) References cited:
- EP-A- 0 285 131
- DE-A- 2 046 251
- FR-A- 1 226 451

## Description

The present invention relates to a rear subassembly for a motor vehicle floor of the type indicated in the pre-characterizing portion of claim 1.

FR-A-1 226 451 shows a rear floor subassembly of the type indicated above having side members of conventional opened type and requiring a base member to enable the assembling of the suspension.

More specifically, the rear floor subassembly according to the invention is suitable for supporting the fixing points of a suspension unit of the type described in Italian patent application No. 68092-A/88 and in the corresponding European Patent Application No. 89830538.3 filed by the same Applicant and designating the same inventor as the present application. This suspension is an independent suspension which is intended to be assembled as a free-standing unit and then mounted beneath the floor of the motor car body. All the elements of the suspension are carried by the ends of an auxiliary cross member which is fixed under the floor of the body, with the exception of the front ends of the lower suspension arms which are carried by two independent front supports also intended to be fixed under the floor of the body. The technical problem behind the present invention is the provision of a rear floor subassembly which can provide excellent support for the auxiliary cross member and the front supports. At the same time, the invention has the object of providing a rear floor subassembly which is particularly strong in the direction of the forces induced by accidental rear collisions and which can achieve excellent absorption of the impact energy by the progressive deformation of its various regions. Finally, a further object of the invention is to provide a rear floor subassembly which can be connected to the central structure of the floor and the body in an optimum manner, and which affords protection and accommodation for some auxiliary members such as the fuel tank, the wheel and the exhaust silencer, all with fairly simple and reliable construction suitable for mass production.

In order satisfactorily to resolve all the technical problems specified above, the subject of the invention is a rear subassembly having the features set forth in the characterizing portion of claim 1.

The invention will now be described with reference to the appended drawings, provided purely by way of non-limiting example, in which:

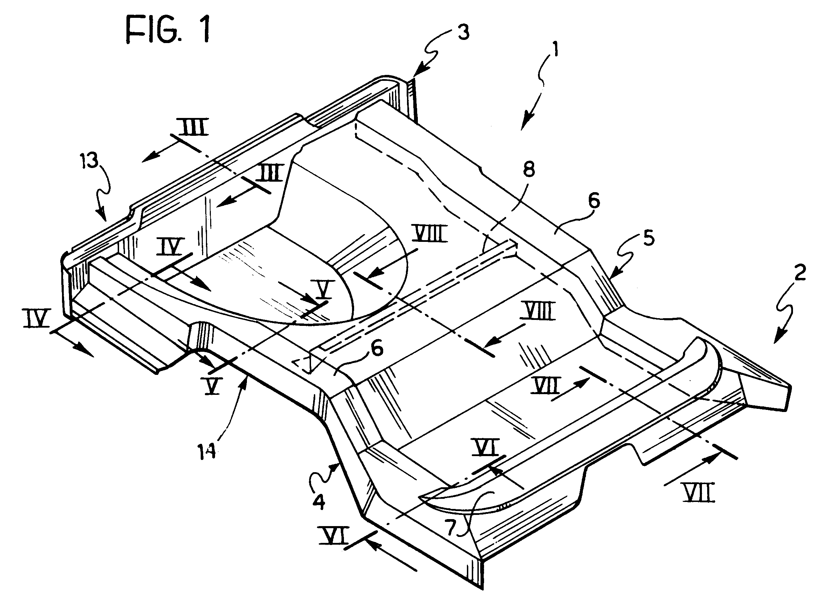

Figure 1 is a schematic perspective view of the rear floor assembly according to the invention,
Figure 2 is an exploded view of the rear floor according to the invention, and
Figures 3 to 8 are sections taken on the lines III to VIII of Figure 1, on an enlarged scale.

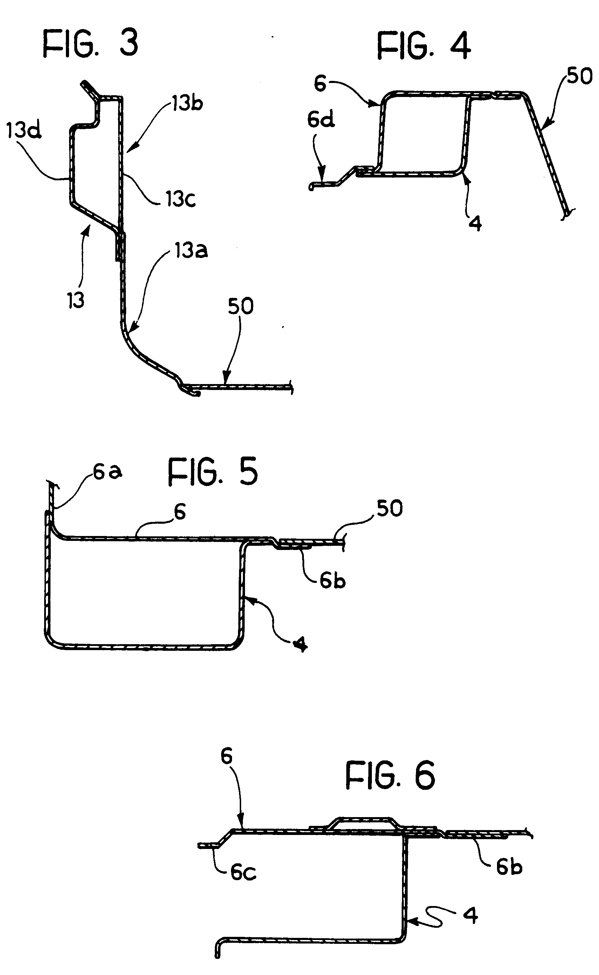

The rear floor 1 comprises a first and a second side member 4, 5 which have U-shaped cross-sections in the region intended to be situated in correspondence with the wheel (see Figure 5) and L-shaped cross-sections in the front regions 2 and the rear regions 3 (Figures 6, 4). An attachment 11 for a corresponding end of an auxiliary cross member (not illustrated) which forms part of a rear suspension unit of the type described in the prior patent application No.68092-A/88 and in the corresponding European Patent Application No. 89830538.3 by the Applicant, as well as an attachment 12 for the front end of the lower suspension arm, is fixed to each of the side members 4, 5. Since all the attachments are mounted on the side members 4, 5, a high degree of precision is achieved in the relative positioning of the suspension elements.

A first and a second reinforcing plate 6 is welded on top of the first and second side member 4, 5 respectively and, together with the side members, defines a closed cross-section (Figure 5) in the region which is intended to be situated in correspondence with the wheel.

In this region, the reinforcing plate 6 also has a vertical flange 6a on its outer side for the fixing of the inner wing (not shown). Each plate 6 also has a flange 6b on its longitudinal inner edge for the welding of a floor element 50. In correspondence with the front portions of the side members 4, 5 (see Figure 6), the plate 6 has a flange 6c on its outer longitudinal edge for welding to the side structure of the motor vehicle body. In correspondence with the rear ends of the side members (Figure 4), the plate 6 has an L-shaped cross-section, so as to give the side member a closed cross-section, and flanges 6d for welding to the side structure of the body.

A rear cross member 13 is fixed to the rear ends of the side members (see also Figure 3). As shown in Figure 3, the cross member 13 has a lower part 13a whose lower edge is welded to the floor element 50, and an upper part 13b with a closed cross-section defined by two sheet metal elements 13c and 13d welded along their upper and lower edges.

In order to ensure the necessary precision in the relative positioning of the two side members 4, 5, they are interconnected by means of the rear cross member 13, a front cross member 7 and an intermediate cross member 8.

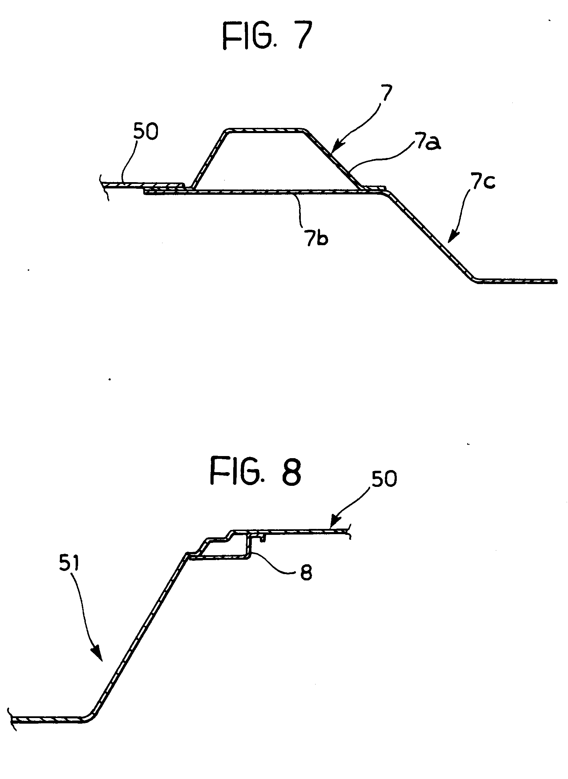

The rear cross member 13 also acts as a structural support for the bumpers. The central cross member 8 (see also Figure 8) also acts as a transverse support for the floor 50. The front cross member 7 (Figure 7) has a box structure defined by an element 7a and a forwardly-extending element 7b with a flange 7c. The front edge of the floor 50 is fixed thereto. The cross member 7 is also used for anchoring the rear seat of the motor vehicle.

The three cross members 13, 8, 7 are first assembled with the two side members 4, 5 so as to establish their relative positions. The frame thus produced is mounted on an assembly fixture which ensures the correct mounting position. The various parts can then be welded together and the floor 50, as well as the inner wings, the side structures of the body, etc., can then be welded.

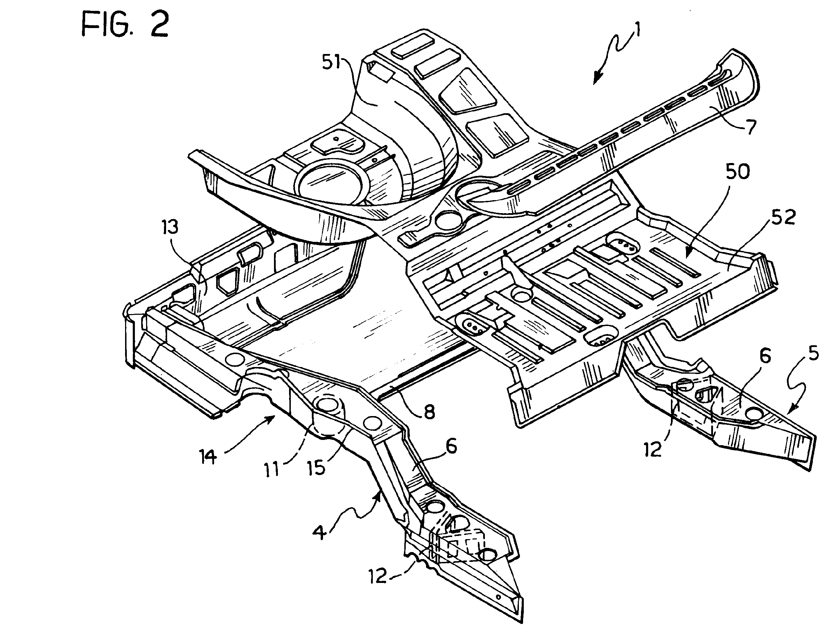

The rear part of the floor element 50 has a recessed region 51 (see also Figure 8) which is intended to house the spare wheel. The front part of the floor 50 also has a lowered surface 52 (Fig. 2) for receiving the rear seat of the motor vehicle. The fuel tank is arranged beneath the floor. A housing for the exhaust silencer is also provided underneath the rear part of the floor.

Naturally, the principle of the invention remaining the same, the forms of embodiment and details of construction may be varied widely with respect to those described and illustrated purely by way of example.

## Claims

1. A rear subassembly (1) for a motor vehicle floor intended for rigid connection at its front end to the central floor structure, as well as for supporting the fixing points (11, 12) of the rear suspension of the motor vehicle, comprising:
- a first and a second side member (4, 5) whose cross-sections vary along their length, each side member (4, 5) having a front end (2), a rear end (3) and an intermediate region which is intended to be situated in correspondence with a respective rear wheel of the vehicle,
- at least three cross members (7, 8, 13) which interconnect the side members (4, 5) respectively at the front end (2), at the intermediate region and at the rear end (3) of the side members (4, 5), and
- a floor element (50) fixed to the platform of the side members (4, 5) and to the cross members (7, 8, 13), characterized in that the side members (4, 5) have U-shaped upwardly opened cross-sections at the intermediate region and L-shaped cross-sections in correspondence with their front (2) and rear (3) end portions and the subassembly further comprises a first and a second upper reinforcing plate (6) joined rigidly to said first and second side member (4, 5) respectively so as to give the side members (4, 5) a boxed configuration at least in correspondence of the intermediate region and at the rear end (3), where being all the fixing points (11, 12) for the rear suspension of the motor vehicle are obtained integrally with the side members (4, 5).

2. A floor subassembly according to Claim 1, characterized in that the upper reinforcing plate (6) has a flange (6b) along its longitudinal inner edge for the welding of the floor element (50), and respective flanges (6a, 6c and 6d) along its longitudinal outer edge for the welding of the inner wing and the side structures of the motor vehicle body.

3. A floor subassembly according to any one of the preceding claims, characterized in that the rear cross member (13) has means for supporting the bumpers, in that the central cross member (8) supports the floor element (50), and in that the front cross member (7) has means for anchoring the rear seat of the motor vehicle.

4. A floor subassembly according to any one of the preceding claims, characterized in that the floor element (50) has a compartment (51) for housing the spare wheel of the motor vehicle, as well as housings for accommodating the fuel tank and the exhaust silencer beneath the floor.

5. A floor subassembly according to claim 3, characterized in that the rear cross member (13) and the side members (4, 5) are formed so as to encourage progressive yielding of the structure in the event of an impact at the rear.

## Patentansprüche

1. Hintere Baugruppe (1) für einen Kraftfahrzeugboden, welche zur starren Verbindung an ihrem vorderen Ende mit dem zentralen Bodenaufbau sowie ebenso zum Tragen der Fixierpunkte (11, 12) der hinteren Aufhängung des Kraftfahrzeugs gedacht ist, umfassend:
- ein erstes und ein zweites Seitenelement (4, 5), deren Querschnitte sich entlang ihrer Länge verändern, wobei jedes Seitenelement (4, 5) ein vorderes Ende (2), ein hinteres Ende (3) und einen Zwischenbereich aufweist, der dazu gedacht ist, in Übereinstimmung mit einem jeweiligen Hinterrad des Fahrzeugs angeordnet zu werden,
- wenigstens drei Querelemente (7, 8, 13), welche die Seitenelemente (4, 5) jeweils am vorderen Ende (2), im Zwischenbereich und am hinteren Ende (3) der Seitenelemente (4, 5) miteinander verbinden, und
- ein Bodenelement (50), welches an der Plattform der Seitenelemente (4, 5) und an den Querelementen (7, 8, 13) festgelegt ist,
**dadurch gekennzeichnet,**
daß die Seitenelemente (4, 5) in dem Zwischenbereich u-förmige, nach oben geöffnete Querschnitte und in Übereinstimmung mit ihren vorderen (2) und hinteren (3) Endabschnitten l-förmige Querschnitte aufweisen, und daß die Baugruppe ferner eine erste und eine zweite obere Verstärkungsplatte (6) umfaßt, welche starr mit dem ersten bzw. zweiten Seitenelement (4, 5) verbunden sind, um den Seitenelementen (4, 5) wenigstens in Übereinstimmung mit dem Zwischenbereich und am hinteren Ende (3) eine abgedeckte Anordnung zu geben, wobei alle Fixierpunkte (11, 12) für die hintere Aufhängung des Kraftfahrzeugs integral mit den Seitenelementen (4, 5) erhalten sind.

2. Bodenbaugruppe nach Anspruch 1, **dadurch gekennzeichnet,** daß die obere Verstärkungsplatte (6) einen Flansch (6b) entlang ihres inneren Längsrands aufweist zum Anschweißen des Bodenelements (50), sowie jeweilige Flansche (6a, 6c und 6d) entlang ihres äußeren Längsrands zum Anschweißen des inneren Flügels und der Seitenaufbauten des Kraftfahrzeugrumpfs.

3. Bodenbaugruppe nach einem der vorhergehenden Ansprüche, **dadurch gekennzeichnet**, daß das hintere Querelement (13) Mittel zum Tragen der Stoßdämpfer aufweist, daß das mittlere Querelement (8) das Bodenelement (50) trägt, und daß das vordere Querelement (7) Mittel zum Verankern des Rücksitzes des Kraftfahrzeugs aufweist.

4. Bodenbaugruppe nach einem der vorhergehenden Ansprüche, **dadurch gekennzeichnet,** daß das Bodenelement (50) ein Fach (51) zum Unterbringen des Ersatzrads des Kraftfahrzeugs aufweist, sowie Unterbringungen zum Aufnehmen des Kraftstofftanks und des Auspuffschalldämpfers unter dem Boden.

5. Bodenbaugruppe nach Anspruch 3, **dadurch gekennzeichnet,** daß das hintere Querelement (13) und die Seitenelemente (4, 5) derart ausgebildet sind, daß sie ein zunehmendes Nachgeben des Aufbaus im Falle eines Aufpralls am Heck begünstigen.

## Revendications

1. Sous-ensemble arrière (1) pour le plancher d'un véhicule automobile, destiné à être assemblé rigidement à la structure de plancher centrale à son extrémité avant ainsi qu'à supporter les points de fixation (11, 12) de la suspension arrière du véhicule automobile comprenant :
- un premier et un deuxième éléments latéraux (4, 5) dont les sections varient le long de leur longueur, chaque élément latéral (4, 5) ayant une extrémité avant (2), une extrémité arrière (3) et une région intermédiaire qui est destinée à être située au droit d'une roue arrière respective du véhicule,
- au moins trois traverses (7, 8, 13) qui interconnectent les éléments latéraux (4, 5) respectivement à l'extrémité avant (2), dans la région intermédiaire et à l'extrémité arrière (3) des éléments latéraux (4, 5), et
- un élément de plancher (50) fixé à la plate-forme des éléments latéraux (4, 5) et aux traverses (7, 8, 13), caractérisé en ce que les éléments latéraux (4, 5) ont des sections en forme de U, ouvertes vers le haut, dans la région intermédiaire, et des sections en forme de L au droit de leurs portions d'extrémité avant (2) et d'extrémité arrière (3), et le sous-ensemble comprend en outre une première et une deuxième plaques de renforcement supérieures (6) réunies rigidement au premier et au deuxième éléments latéraux (4, 5) respectivement de manière à donner une configuration de caisson aux éléments latéraux (4, 5) au moins au droit de la région intermédiaire et à l'extrémité arrière (3) où tous les points de fixation (11, 12) prévus pour la suspension arrière du véhicule automobile sont obtenus en une seule pièce avec les éléments latéraux (4, 5).

2. Sous-ensemble de plancher selon la revendication 1, caractérisé en ce que la plaque de renforcement supérieure (6) possède une aile (6b) le long de son bord intérieur longitudinal, pour le soudage de l'élément de plancher (50), et des ailes respectives (6a, 6c et 6d) le long du bord extérieur longitudinal pour le soudage de l'aile intérieure et des structures latérales de la caisse du véhicule automobile.

3. Sous-ensemble de plancher selon une quelconque des revendications précédentes, caractérisé en ce que la traverse arrière (13) possède des moyens pour supporter les pare-chocs, en ce que la traverse centrale (8) supporte l'élément de plancher (50) et en ce que la traverse avant (7) possède des moyens pour ancrer le siège arrière du véhicule automobile.

4. Sous-ensemble de plancher selon une quelconque des revendications précédentes, caractérisé en ce que l'élément de plancher (50) présente un compartiment (51) destiné à loger la roue de secours du véhicule automobile, ainsi que des logements destinés à recevoir le réservoir de carburant et le silencieux d'échappement au-dessous du plancher.

5. Sous-ensemble de plancher selon la revendication 3, caractérisé en ce que la traverse arrière (13) et les éléments latéraux (4, 5) sont formés de manière à favoriser la déformation progressive de la structure dans le cas d'un impact à l'arrière.
